# EUROPEAN PATENT SPECIFICATION

(11) **EP 1 466 119 B1**
(45) Date of publication and mention of the grant of the patent: **21.06.2006**
(21) Application number: 02805751.1
(22) Date of filing: 02.12.2002
(51) Int. Cl.: F16K 31/40

(54) **Solenoid piloted membrane valve for santary equipment**
Eletromagnetisches vorgesteuertes Membranventil für sanitäre Einrichtungen
Vanne membrane pilotée par une soupape électromagnétique pour appareils sanitaires

(30) Priority: 28.12.2001 IT MI20012816
(43) Date of publication of application: 13.10.2004
(73) Proprietor: Ode Officine di Esino Lario S.R.L., 23823 Colico (IT)
(72) Inventor: PENSA, Carlo, Maria, I-23825 Esino Lario (IT)
(74) Representative: Riccardi, Sergio
(86) International application number: PCT/EP2002/013606
(87) International publication number: WO 2003/056222

(56) References cited:
- EP-A- 0 930 402
- EP-A- 0 936 317
- US-B1- 6 296 227

## Description

The present invention is about solenoid piloted membrane valves, which are well known devices made of a valve body where the fluid's inlets and outlets are obtained, an orifice with a shutter and a cap on which the actuator consisting of a coil is found, of a stable core and of a plunger connected to the pilot valve. The configurations of the solenoid piloted membrane valves can be various according to the different uses for which they have been made. They can have the shutter controlled by a pressure play obtained through some appropriate devices such as gauged holes communicating between two chambers, wherein the chamber that makes the closing pressure towards the outlet is discharged through a pilot system. The control of the plunger occurs by energizing the electromagnet in such a manner that the electromotive force tends to make the plunger match with the stable core so as to move the shutter to open the passage through the valve's orifice.

A specific field of use of solenoid piloted membrane valves is the sanitary one where the solenoid valves' opening and closing are obtained through an electronic control system which perceives the user's presence and actuates the same solenoid valve that can, for example, open the faucet's water flow.

The state of the art has developed more and more miniaturized solenoid valves so that they can be directly inserted into the faucet with very low power absorbance of the magnet, with bi-stable systems in a way that with a very small electrical impulse the solenoid valve itself can be turned on and turned off with an opposite impulse; in such case is therefore possible to use small size, long lasting batteries.

Compact size solenoid piloted membrane valves have been developed characterized in having the fluid's inlet and outlet coaxial relative to the thread which the valve itself gets fixed to the housing in the faucet or in the sanitary equipment. Said solution which has even solved a space problem turns out to have a big handicap in the connection between the electromagnet and the electronic system because it too has to be removable in order to screw and unscrew the same valve: this creates serious problems of impermeability in a system easily reachable by water.

U.S. Patent No. 6 296 227 illustrates a valve assembly for irrigation systems, having a valve member encased within a valve housing including a bonnet. Clamp members are provided, but only for retaining the upper bonnet and the main valve body, and having the mere function of facilitating the access to the valve housing interior for service or maintenance.

EP Patent No. 0 930 402 A illustrates a solenoid piloted membrane valve for sanitary equipment.

This valve is screwed into the valve body plate and can be seen as the closest prior art corresponding to the preamble of claim 1.

The present invention solves this inconvenience in an easy and efficient manner, providing a solenoid piloted membrane valve for sanitary equipment characterized in having a cylindrical body, with coaxial inlet and outlet on the same cylinder's base, so as to be fixed to the housing without making it rotate but just axially inserting it and locking it through an appropriate fixing system such as a ring nut or a threaded plate or a shaped ring, thus to allow the assembly of the electrical control system of the valve itself into the equipment prior to the insertion of the valve even with fixed links between the two devices.

The essential features of the solenoid valve for sanitary equipment according to the present invention are recited in claim 1, while further particulars are highlighted in the dependent claims.

Some preferred embodiments of the solenoid valve according to the present invention are shown in an explanatory but not limiting way, with reference to the figures of the annexed sheets of drawings wherein:
Figure 1 is an elevation sectional view of the solenoid valve;
Figure 2 is a similar view of the ring nut which can be used in order to fix the valve into the appropriate housing;
Figure 3 is a similar view showing the solenoid valve of Figure 1 fixed through the ring nut of Figure 2 into the housing obtained, for example, in a faucet;
Figure 4 is a similar view of Figure 3 showing another fixing solution of the valve with threaded plates and fastening screws, and outlined the connection between the electromagnet and the electronic system; and
Figure 5 is yet another similar view of Figure 3 showing a further fixing solution of the valve to its housing through a fastening shaped ring.

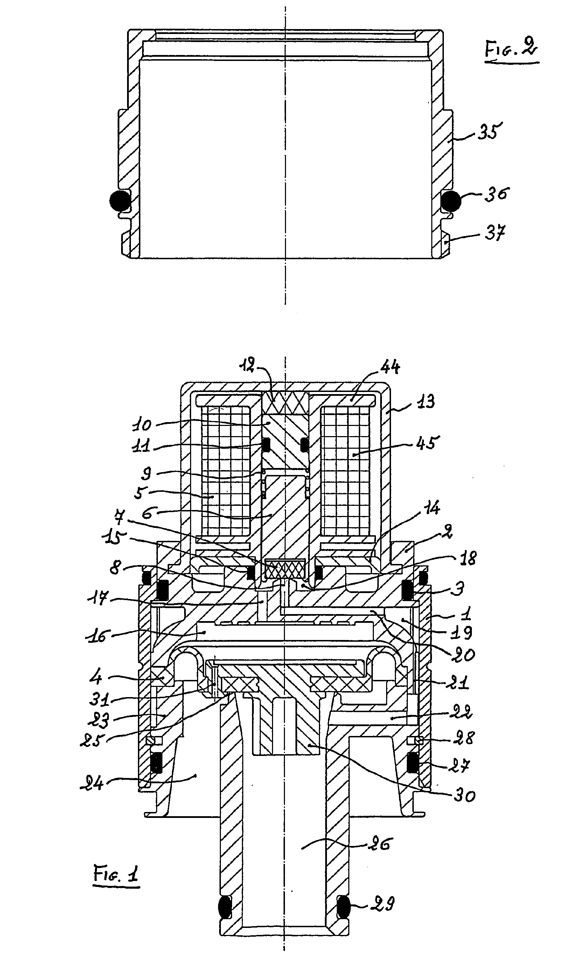

Making reference to Figure 1, the valve's outer case is indicated with the number 1 where the upper cap 2 is housed and is sealed through the O-ring 3 wherein the upper housing of the shutter membrane 4 is obtained and the housing of the electromagnet 5 with the membrane's pilot system; the system consists of a plunger 6 which carries the shutter 7 that closes the orifice 8 pushed by a spring 9; the stable core 10, sealed by the O-ring 11, is provided with a permanent magnet 12 which closes the outer circuit made of the case 13 and the washer 14. The O-ring 15 seals everything. The upper cap together with the shutter membrane forms the chamber 16 that through a duct 17 is communicating with the chamber 18 and the orifice 8; said orifice is communicating with the outlet through the duct 19, the chamber 20, the passage 21, and the hole 22. The valve housing body 23 has the shutter membrane's lower housing, the passages 24 of the inlet duct and the orifice 25 which communicates with the outlet duct 26. The O-ring 27 seals everything and the ring 28 locks all together. The O-ring 29 completes the seal of the outlet. The shutter membrane 4 holds the support 30 where the duct 31 is obtained. Said duct has a section lower relative to the pilot's orifice.

The coil-sleeve 44 of the pilot magnet carries wound the magnetic circuit 45.

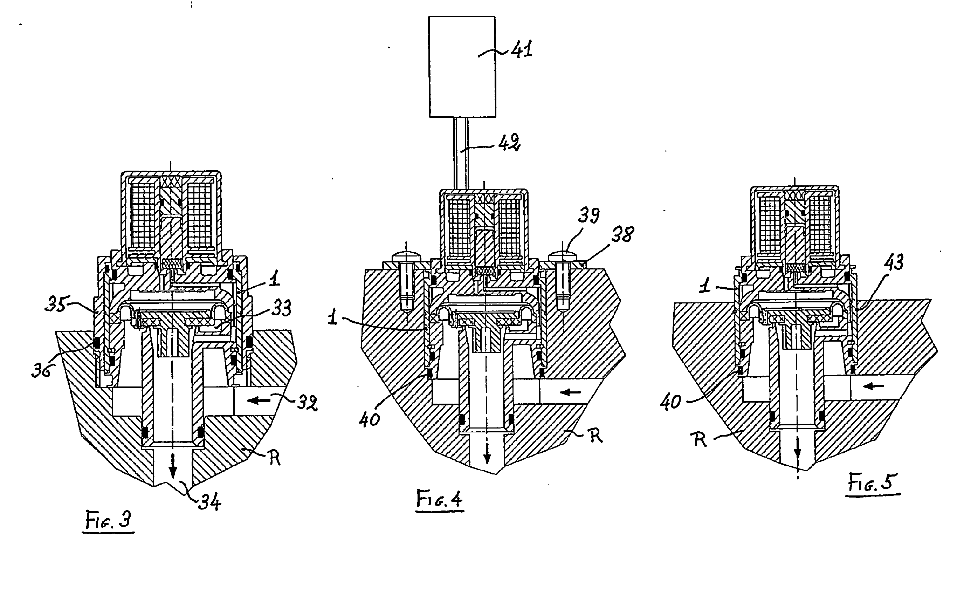

When the valve is assembled in its housing which could be a faucet R, as shown in Figure 3 for example, the pressurized fluid coming from the duct 32 through the hole 31 fills the chamber 16 which has a shutter membrane's section bigger with respect to the lower chamber 33 so that the shutter membrane pressurizes the orifice 25 to close.

When the power is turned on, in this case in pulsed form due to the presence of the permanent magnet 12, to the winding of the electromagnet, the plunger 6 is put in contact with the stable core 10 by separating the shutter 7 from the orifice 8. Said position is stable and it stays like that until an opposite impulse does not create an opposite push which makes the plunger 6 move away from the stable core 10 and thus closes the valve again. In the open valve position, the chamber 16, the duct 17 and the chamber 18 are put into communication through the passages 19, 20, 21, and 22 with the lower pressure outlet duct 26 and thus the unbalance created between the chamber 16 and the chamber 33 due to the different sizes of the passages 31 and 8 makes, by reducing the pressure in the chamber 16, the shutter membrane 4 moves upwards and opens the orifice 25 to the liquid flow that will thus flow down the outlet 34 through the duct 26.

In figure 2 the ring nut 35 is shown with the O-ring 36, threaded in the section 37 that allows the solenoid valve fixing into an appropriate housing. Another way of fixing the valve through plates 38 and screws 39 is shown in figure 4; in this case the O-ring 40 will be inserted in order to create a seal. Again in figure 4, a generic electronic circuit 41 is connected to the electromagnet through cables 42. It is clearly shown that said circuit can be inserted into an appropriate housing of the faucet or the sanitary equipment and thus stay fixed during the assembly and disassembly of the solenoid valve because there is no rotation of the valve.

Another way of assembling the valve by fixing it with an appropriate shaped clips 43 is shown in figure 5.

It is thus understood that the solenoid valve according to the present invention fully achieves the preset objects, by making the solenoid valve's fixing into its housing in the sanitary equipment through a simple axial insertion lacking any fixing element that requires a rotation of the solenoid valve with respect to its housing and therefore by allowing a fixed connection between the electronic control system and the solenoid valve with consequent guarantee of tightness and integrity of the electrical connections, as it is also indicated in the appended claims.

## Claims

1. A solenoid piloted membrane valve for sanitary equipment, basically comprising an outer case (1) of the valve where an upper cap (2) is housed, in which cap (2) the upper housing of a shutter membrane (4) is arranged and the housing of a electromagnet (5) with the membrane's pilot system consisting of a plunger (6) which holds a shutter (7), which shutter (7) closes an orifice (8) pushed by a spring (9) and of a stationary core (10) provided with a permanent magnet (12) which closes the outer circuit made up of a case (13) and a washer (14), said upper cap (2) together with the shutter membrane (4) forming a chamber (16) that through a duct (17) of the cap (2) communicates with a chamber (18) and with the orifice (8), which orifice (8) communicates with the outlet through a duct (19), a chamber (20), a passage (21), and a hole (22), a valve housing body (23) including the shutter membrane's (4) lower housing, the passages (24) of the inlet duct and an orifice (25) which communicates with the outlet duct (26) and a ring (28) which locks the upper cap (2), the shutter membrane (4) and the valve housing body (23) together, the shutter membrane (4) holding a support (30) where a duct (31) is arranged, which duct (3) has a section smaller than the pilot's orifice, the water seals between said various elements being obtained through O-ring (3, 11, 15, 27, 29), whereby the outer case (1) of the valve consists of a cylindrical body, with coaxial inlet and outlet on the same cylinder's base, **characterized in that** the cylindrical body is thread less so that the solenoid valve can be fixed to its housing in the sanitary equipment without making it rotate but just by axially inserting it and locking it through an appropriate fixing system, said fixing system consisting of a ring nut (35) with a sealing O-ring (36) and a threaded section (37) that allows the solenoid valve's fixing into its housing.

2. A solenoid piloted membrane valve for sanitary equipment, basically comprising an outer case (1) of the valve where the upper cap (2) is housed, in which cap (2) the upper housing of a shutter membrane (4) is arranged and the housing of a electromagnet (5) with the membrane's pilot system consisting of a plunger (6) which holds a shutter (7), which shutter (7) closes a orifice (8) pushed by a spring (9) and of a stationary core (10) provided with a permanent magnet (12) which closes the outer circuit made up of a case (13) and a washer (14), said upper cap (2) together with the shutter membrane (4) forming a chamber (16) that through a duct (17) of the cap (2) is communicates with a chamber (18) and with the orifice (8), which orifice (8) communicates with the outlet through a duct (19), a chamber (20), a passage (21), and a hole (22), a valve housing body (23) including the shutter membrane's (4) lower housing, passages (24) of the inlet duct and an orifice (25) which communicates with the outlet duct (26) and a ring (28) which locks the upper cap (2), the shutter membrane (4) and the valve housing body (23) together, the shutter membrane (4) holding a support (30) where a duct (31) is arranged, which duct (3) has a section smaller than the pilot's orifice, the water seals between said various elements being obtained through O-rings (3, 11, 15, 27, 29), whereby the outer case (1) of the valve consists of a cylindrical body, with coaxial inlet and outlet on the same cylinder's base, **characterized in that** the cylindrical body is thread less so that the solenoid valve can be fixed to its housing in the sanitary equipment without making it rotate but just axially inserting it and locking it through an appropriate fixing system, said fixing system consisting of a plate (38) fixed to the equipment by screws (39) and with the insertion of a sealing O-ring (40).

3. A solenoid piloted membrane valve for sanitary equipment, basically comprising an outer case (1) of the valve where an upper cap (2) is housed, in which cap (2) the upper housing of a shutter membrane (4) is obtained and the housing of a electromagnet (5) with the membrane's pilot system consisting of a plunger (6) which holds a shutter (7) that which shutter closes a orifice (8) pushed by a spring (9) and of a stationary core (10) provided with a permanent magnet (12) which closes the outer circuit made up of a case (13) and a washer (14), said upper cap (2) together with the shutter membrane (4) forming a chamber (16) that through a duct (17) of the cap (2) communicates with the chamber (18) and with the orifice (8), which orifice (8) is communicates with the outlet through a duct (19), a chamber (20), a passage (21), and a hole (22), a valve housing body (23) including the shutter membrane's (4) lower housing, passages (24) of the inlet duct and an orifice (25) which communicates with the outlet duct (26) and a ring (28) which locks the upper cap (2), the shutter membrane (4) and the valve housing body (23) together, the shutter membrane (4) holding a support (30) where a duct (31) is arranged, which duct (3) has a section smaller than the pilot's orifice, the water seals between said various elements being obtained through O-ring (3, 11, 15, 27, 29), whereby the outer case (1) of the valve consists of a cylindrical body, with coaxial inlet and outlet on the same cylinder's base, **characterized in that** the cylindrical body is thread less so that the solenoid valve can be fixed to its housing in the sanitary equipment without making it rotate but just axially inserting it and locking it through an appropriate fixing system, said fixing system consisting of an appropriate shaped clips (43) and with the insertion of a sealing O-ring (40).

4. The soienoid piloted membrane valve according to any of the previous claims, **characterized in that** the control electronic circuit (41) is permanently connected to the electromagnet (5) through cables (42) and it can stay fixed into the equipment's housing during the solenoid valve's assembly and disassembly operations.

## Patentansprüche

1. Elektromagnetisch vorgesteuertes Membranventil für sanitäre Einrichtungen, im Wesentlichen umfassend ein äußeres Gehäuse (1) des Ventils, worin eine obere Kappe (2) untergebracht ist, in welcher Kappe (2) das obere Gehäuse einer Verschlussmembran (4) und das Gehäuse eines Elektromagneten (5) angeordnet ist, wobei das Membransteuersystem aus einem Plunger (6) besteht, welcher einen Verschluss (7) hält, wobei der Verschluss (7) eine Öffnung (8), angetrieben durch eine Feder (9) und einen stationären Kern (10), der mit einem Permanentmagneten (12) versehen ist, verschließt, was die äußere Schaltung, bestehend aus einem Gehäuse (13) und einer Unterlegscheibe (14), schließt, wobei die obere Kappe (2) zusammen mit der Verschlussmembran (4) eine Kammer (16) bildet, welche über eine Leitung (17) der Kappe (2) mit einer Kammer (18) und mit dem Durchgang (8) kommuniziert, wobei der Durchgang (8) mit dem Ausgang durch eine Leitung (19), eine Kammer (20), eine Passage (21) und eine Durchbohrung (22) kommuniziert, wobei ein Ventilgehäusekörper (23) das untere Gehäuse der Verschlussmembran (4), Passagen (24) der Eingangsleitung und einen Durchgang (25), welcher mit der Ausgangsleitung (26) kommuniziert und einen Ring (28) umfasst, welcher die obere Kappe (2), die Verschlussmembran (4) und den Ventilgehäusekörper (23) zusammenschließt, wobei die Verschlussmembran (4) einen Träger (30) hält, worin eine Leitung (31) angeordnet ist, wobei die Leitung (31) einen Abschnitt aufweist, welcher kleiner als die Öffnung des Pilotsystems ist, wobei die Wasserdichtungen zwischen den verschiedenen Elementen durch O-Ringe (3, 11; 15, 27, 29) erhalten werden, wobei das äußere Gehäuse (1) des Ventils aus einem zylindrischen Körper mit koaxialen Eingängen und Ausgängen auf der gleichen Zylindergrundfläche besteht, **dadurch gekennzeichnet, dass** der zylindrische Körper gewindelos ist, so dass das elektromagnetisch vorgesteuerte Ventil in seinem Gehäuse in der sanitären Einrichtung ohne Rotationsbewegung, sondern lediglich durch axiales Einführen und Befestigen durch ein geeignetes Befestigungssystem verschlossen werden kann, wobei das Befestigungssytem aus einer Ringmutter (35) mit einem abdichtenden O-Ring (36) und einem gewindelosen Abschnitt (37) besteht, was die Befestigung des elektromagnetisch vorgesteüerten Ventils in seinem Gehäuse ermöglicht.

2. Elektromagnetisch vorgesteuertes Membranventil für sanitäre Einrichtungen, im Wesentlichen umfassend ein äußeres Gehäuse (1) des; Ventils, worin eine obere Kappe (2) untergebracht ist, in welcher Kappe (2) das obere Gehäuse einer Verschlussmembran (4) und das Gehäuse eines Elektromagneten (5) angeordnet ist, wobei das Membranpilotsystem aus einem Plunger (6) besteht, welcher einen Verschluss (7) hält, wobei der Verschluss (7) eine Öffnung (8), angetrieben durch eine Feder (9) und durch einen stationären Kern (10), versehen mit einem Permanentmagneten (12), verschließt, was die äußere Schaltung, bestehend aus einem Gehäuse (13) und einer Unterlegscheibe (14), schließt, wobei die obere Kappe (2) zusammen mit der Verschlussmembran (4) eine Kammer (16) bildet, welche über eine Leitung (17) der Kappe (2) mit einer Kammer (18) und mit einem Durchgang (8) kommuniziert, wobei der Durchgang (8) mit dem Ausgang durch eine Leitung (19), eine Kammer (20), eine Passage (21) und eine Durchbohrung (22) kommuniziert, wobei ein Ventilgehäusekörper (23) das untere Gehäuse der Verschlussmembran (4), Passagen (24) der Eingangsleitung und eine Öffnung (25), welche mit der Ausgangsleitung (26) kommuniziert und einen Ring (28) ümfasst, welcher die obere Kappe (2), die Verschlussmembran (4) und den Ventilgehäusekörper (23) zusammenschließt, wobei die Verschlussmembran (4) einen Träger (30) hält, worin eine Leitung (31) angeordnet ist, wobei die Leitung (31) einer Abschnitt aufweist, der kleiner als die Öffnung des Pilotsystemes ist, und wobei die Wasserdichtungen zwischen den verschiedenen Elementen durch O-Ringe (3, 11, 15, 27, 29) erhalten werden, wobei das äußere Gehäuse (1) des Ventils aus einem zylindrischen Körper, mit koaxialem Eingang und Ausgang auf der gleichen Zylindergrundfläche besteht, **dadurch gekennzeichnet, dass** der zylindrische Körper gewindelos ist, so dass das elektromagnetisch vorgesteuerte Ventil mit seinem Gehäuse in der sanitären Einrichtung ohne Rotationsbewegung befestigt werden kann, sondern lediglich durch axiales Einführen und Befestigen durch ein geeignetes Befestigungssystem, wobei das Befestigungssystem aus einer Platte (38) besteht, welche an der Einrichtung durch Schrauben (39) befestigt ist und unter Einführung eines dichtenden O-Ringes (40)

3. Elektromagnetisch vorgesteuertes Membranventil für sanitäre Einrichtungen, im Wesentlichen umfassend ein äußeres Gehäuse (1) des Ventils, worin eine obere Kappe (2) untergebracht ist, in welcher Kappe (2) das obere Gehäuse einer Verschlussmembran (4) und das Gehäuse eines Elektromagneten (5) angeordnet ist, wobei das Membranpilotsystem aus einem Plunger (6) besteht, welcher einen Verschluss (7) hält, welcher Verschluss eine Öffnung (8) verschließt, welche durch eine Feder (9) und einem stationären Kern (10) der mit einem Permanentmagneten (12) versehen ist, welcher die äußere Schaltung, bestehend aus einem Gehäuse (13) und einer Unterlegscheibe (14) schließt, vorangetrieben wird, wobei die obere Kappe (2) zusammen mit der Verschlussmembran eine Kammer; (16) bildet, welche durch eine Leitung (17) der Kappe (2) mit einer Kammer (18) und der Öffnung (8) kommuniziert, wobei die Öffnung (8) mit dem Ausgang durch eine Leitung (19), eine Kammer (20), eine Passage (21) und eine Durchbohrung (22) kommuniziert, wobei ein Ventilgehäusekörper (23) das untere Gehäuse der Verschlubsmambran (4), Passagen (24) der Eingangsleitung und eine Öffnung (25), welche mit der Ausgangsleitung (26) kommuniziert und einen Ring (28) umfasst, welcher die obere Kappe (2), die Verschlussmembran (4) und den Ventilgehäusekörper (23) zusammenschließt, wobei die Verschlussmembran (4) einen Träger (30) halt, worin eine Leitung (31) angeordnet ist, wobei die Leitung (31) einen Abschnitt aufweist, welcher kleiner als die Öffnung des Pilotsystems ist, wobei die Wasserabdichtungen zwischen den verschiedenen Elementen durch O-Ringe (3, 11, 15, 27, 29) erhalten werden, wodurch das äußere Gehäuse (1) des Ventils aus einem zylindrischen Körper mit koaxialem Eingang und Ausgang auf derselben Zylindergrundflache besteht, **dadurch gekennzeichnet, dass** der zylindrische Körper gewindelos ist, so dass das elektromagnetisch vorgesteuerte Ventil mit seinem Gehäuse in der sanitären Einrichtung ohne Rotationsbewegung befestigt werden kann, sondern lediglich durch axiales Einführen und Befestigen durch ein geeignetes Befestigungssystem, wobei das Befestigungssystem aus einer geeignet geformte Schnappverbindung (43) unter Einführung eines abdichtenden O-Ringes (40) besteht.

4. Elektromagnetisch vorgesteuertes Ventil gemäß den vorhergehenden Ansprüchen, **dadurch gekennzeichnet, dass** die steuerelektronische Schaltung (41) permanent mit dem Elektromagneten (5) durch Kabel (42) verbunden ist und in dem Gehäuse der Einrichtung während des Schließens und Öffnens des elektromagnetisch vorgesteuerten Ventils befestigt bleiben kann.

## Revendications

1. Vanne à membrane pilotée par une soupape électromagnétique pour appareils sanitaires, comprenant fondamentalement un boîtier externe (1) de la vanne dans lequel un capuchon supérieur (2) est logé, dans lequel capuchon (2), le logement supérieur d'une membrane (4) de clapet de distribution est agencé, et le logement d'un électroaimant (5) avec le système de pilote de la membrane se composant d'un piston (6) qui maintient un clapet de distribution (7), lequel clapet de distribution (7) ferme un orifice (8) poussé par un ressort (9) et un noyau (10) fixe prévu avec un aimant permanent (12) qui ferme le circuit externe composé d'un boîtier (13) et d'une rondelle (14), lequel capuchon supérieur (2) conjointement à la membrane (4) de clapet de distribution formant une chambre (16) qui, par l'intermédiaire d'un conduit (17) du capuchon (2), communique avec une chambre (18) et avec l'orifice (8), lequel orifice (8) communique avec la sortie en passant par un conduit (19), une chambre (20), un passage (21) et un trou (22), le corps de logement (23) de vanne comprenant le logement inférieur de la membrane (4) de clapet de distribution, des passages (24) du conduit d'entrée et un orifice (25) qui communique avec le conduit de sortie (26) et une bague (28) qui bloque le capuchon supérieur (2), la membrane (4) de clapet de distribution et le corps de logement (23) de vanne ensemble, la membrane (4) de clapet de distribution maintenant un support (30) où un conduit (31) est agencé, lequel conduit (3) a une section inférieure à l'orifice du pilotage, les joints d'étanchéité à l'eau situés entre lesdits différents éléments étant obtenus par le biais de joints toriques (3, 11, 15, 27, 29), moyennant quoi le boîtier externe (1) de la vanne se compose d'un corps cylindrique, avec une entrée et une sortie coaxiales sur la base du même cylindre, **caractérisée en ce que** le corps cylindrique est sans fin, de sorte que la vanne électromagnétique peut être fixée dans son logement dans les appareils sanitaires sans la faire tourner, mais en l'insérant uniquement de manière axiale et en la bloquant par le biais d'un système de fixation approprié, ledit système de fixation se composant d'un écrou annulaire (35) et d'un joint torique d'étanchéité (36) fileté dans une section (37) qui permet de fixer la vanne électromagnétique dans son logement.

2. Vanne à membrane pilotée par soupape électromagnétique pour appareils sanitaires, comprenant fondamentalement un boîtier externe (1) de la vanne dans lequel un capuchon supérieur (2) est logé, dans lequel capuchon (2), le logement supérieur d'une membrane (4) de clapet de distribution est agencé, et le logement d'un électroaimant (5) avec le système de pilotage de la membrane se composant d'un piston (6) qui maintient un clapet de distribution (7), lequel clapet de distribution (7) ferme un orifice (8) poussé par un ressort (9) et un noyau (10) fixe prévu avec un aimant permanent (12) qui ferme le circuit externe composé d'un boîtier (13) et d'une rondelle (14), ledit capuchon supérieur (2) conjointement à la membrane (4) de clapet de distribution formant une chambre (16) qui, par l'intermédiaire d'un conduit (17) communique avec une chambre (18) et avec l'orifice (8), lequel orifice (8) communique avec la sortie en passant par un conduit (19), une chambre (20), un passage (21) et un trou (22), le corps de logement (23) de vanne comprenant le logement inférieur de la membrane (4) de clapet de distribution, des passages (24) du conduit d'entrée et un orifice (25) qui communique avec le conduit de sortie (26) et une bague (28) qui bloque le capuchon supérieur (2), la membrane (4) de clapet de distribution et le corps de logement (23) de vanne ensemble, la membrane (4) de clapet de distribution maintenant un support (30) où un conduit (31) est agencé, lequel conduit (3) a une section inférieure à l'orifice de pilotage, les joints d'étanchéité à l'eau entre les différents éléments étant obtenus par le biais de joints toriques (3, 11, 15, 27, 29), moyennant quoi le boîtier externe (1) de la vanne se compose d'un corps cylindrique, avec l'entrée et la sortie coaxiales sur la base du même cylindre, **caractérisé en ce que** le corps de cylindre est sans fil, de sorte que la vanne électromagnétique peut être fixée sur son logement dans les appareils sanitaires sans la faire tourner, mais en l'insérant uniquement de manière axiale et en la bloquant par l'intermédiaire d'un système de fixation approprié, ledit système de fixation se composant d'une plaque (38) fixée sur les appareils par des vis (39) et avec l'insertion d'un joint torique d'étanchéité (40).

3. Vanne à membrane pilotée par soupape électromagnétique pour appareils sanitaires, comprenant fondamentalement un boîtier externe (1) de la vanne dans lequel un capuchon supérieur (2) est logé, dans lequel capuchon (2), on obtient le logement supérieur d'une membrane (4) de clapet de distribution, et le logement d'un électroaimant (5) avec le système de pilotage de la membrane se composant d'un piston (6) qui maintient un clapet de distribution (7), de sorte que lequel clapet de distribution ferme un orifice (8) poussé par un ressort (9) et un noyau (10) fixe prévu avec un aimant permanent (12) qui ferme le circuit externe composé d'un boîtier (13) et d'une rondelle (14), ledit capuchon supérieur (2) conjointement à la membrane (4) de clapet de distribution formant une chambre (16) qui par l'intermédiaire d'un conduit (17) du capuchon (2) communique avec une chambre (18) et l'orifice (8), lequel orifice (8) communique avec la sortie en passant par un conduit (19), une chambre (20), un passage (21) et un trou (22), un corps de logement (23) de vanne comprenant le logement inférieur de la membrane (4) de clapet de distribution, des passages (24) du conduit d'entrée et un orifice (25) qui communique avec le conduit de sortie (26) et une bague (28) qui bloque le capuchon supérieur (2), la membrane (4) de clapet de distribution et le corps de logement (23) de vanne ensemble, la membrane (4) de clapet de distribution maintenant un support (30) dans lequel un conduit (31) est agencé, lequel conduit (3) a une section inférieure à l'orifice de pilotage, les joints d'étanchéité à l'eau entre lesdits différents, éléments étant obtenus par l'intermédiaire d'un joint torique (3, 11, 15, 27, 29), moyennant quoi le boîtier externe (1) de la vanne se compose d'un corps cylindrique, avec une entrée et une sortie coaxiales sur la base du même cylindre, **caractérisé en ce que** le corps cylindrique est sans fil, de sorte que la vanne électromagnétique peut être fixée sur son logement dans les appareils sanitaires sans la faire tourner, mais en l'insérant uniquement de manière axiale et en la bloquant par l'intermédiaire d'un système de fixation approprié, ledit système de fixation se composant d'attaches (43) de forme appropriée et avec l'insertion d'un joint torique d'étanchéité (40).

4. Vanne à membrane pilotée par soupape électromagnétique pour appareils sanitaires, selon l'une quelconque des revendications précédentes, **caractérisée en ce que** le circuit électronique de commande (41) est raccordé de manière permanente à l'électroaimant par des câbles (42) et il peut rester fixé dans le logement des appareils pendant les opérations de montage et de démontage de la vanne électromagnétique.
